# EUROPÄISCHE PATENTSCHRIFT

(11) **EP 3 599 689 B1**
(45) Veröffentlichungstag und Bekanntmachung des Hinweises auf die Patenterteilung: **18.05.2022**
(21) Anmeldenummer: 18185716.0
(22) Anmeldetag: 26.07.2018
(51) Int. Cl.: H02H 1/00, G05B 9/00, H02H 3/00, H02H 7/26

(54) **VERFAHREN ZUM BETREIBEN EINES ELEKTRISCHEN NETZES**
METHOD FOR OPERATING AN ELECTRIC NETWORK
PROCÉDÉ DE FONCTIONNEMENT D'UN RÉSEAU ÉLECTRIQUE

(43) Veröffentlichungstag der Anmeldung: 29.01.2020
(73) Patentinhaber: Siemens Aktiengesellschaft, 80333 München (DE)
(72) Erfinder: Kirkman, Robert, 90518 Altdorf (DE); Krebs, Rainer, 91052 Erlangen (DE)

(56) Entgegenhaltungen:
- US-A1- 2009 149 972
- US-A1- 2014 108 851

## Beschreibung

Die Erfindung bezieht sich auf ein Verfahren zum Betreiben eines elektrischen Netzes, bei dem an einer Vielzahl an Messstellen Schutzgeräte angeschlossen sind, die einen zugeordneten Netzabschnitt des elektrischen Netzes überwachen und jeweils mit zumindest einem geräteseitigen Parameterwert parametriert sind, der die Arbeitsweise des jeweiligen Schutzgerätes beeinflusst.

In elektrischen Energieversorgungsnetzen bzw. Energieverteilnetzen besteht häufig das Problem, dass Schutzgeräte falsch oder zumindest nicht optimal parametriert sind. Falsch oder schlecht parametrierte Schutzgeräte können die Stabilität des Netzes in erheblichem Maße gefährden, weil beispielsweise ein nicht zwingend nötiges Abschalten eines Netzabschnitts wegen dadurch auftretender Überlast in benachbarten Netzabschnitten zu einem kaskadierten Abschalten weiterer Netzabschnitte und im schlimmsten Falle zum Abschalten des gesamten Netzes führen kann; der letztgenannte Fall wird fachsprachlich auch als "blackout" bezeichnet.

Aus der Druckschrift US 2009/149972 A1 ist ein Verfahren für eine Fern-Parametrierung von Schutzgeräten bekannt. Ferner ist die Druckschrift US 2014/108851 A1 zur Parametrierung von Schutzgeräten bekannt.

Der Erfindung liegt die Aufgabe zugrunde, ein Verfahren zum Betreiben eines elektrischen Netzes anzugeben, das hinsichtlich der Parametrierung von Schutzgeräten besser als vorbekannte Verfahren arbeitet.

Diese Aufgabe wird erfindungsgemäß durch ein Verfahren mit den Merkmalen des Patentanspruchs 1 gelöst. Vorteilhafte Ausgestaltungen des erfindungsgemäßen Verfahrens sind in Unteransprüchen angegeben.

Danach ist erfindungsgemäß vorgesehen, dass die Schutzgeräte fernauslesbar sind und mit einer übergeordneten Zentraleinrichtung in Verbindung stehen und die Zentraleinrichtung die geräteseitigen Parameterwerte aus den Schutzgeräten ausliest.

Ein wesentlicher Vorteil des erfindungsgemäßen Verfahrens besteht darin, dass die Schutzgeräte fernauslesbar sind und somit mittels der erfindungsgemäß vorgesehenen Zentraleinrichtung hinsichtlich ihrer jeweiligen Parametrierung überprüft werden können. Eine schlicht falsche oder zumindest nicht optimale Parametrierung kann somit zeitnah erkannt werden und es können Korrekturmaßnahmen ergriffen werden.

Bei einer als vorteilhaft angesehenen Ausführungsvariante ist vorgesehen, dass die Zentraleinrichtung die ausgelesenen geräteseitigen Parameterwerte mit Sollparameterwerten für die jeweiligen Schutzgeräte vergleicht und ein Aktualisierungssignal erzeugt, wenn die ausgelesenen Parameterwerte von den zugeordneten Sollparameterwerten abweichen.

Auch ist es vorteilhaft, wenn die Schutzgeräte fernkonfigurierbar sind und die Zentraleinrichtung die ausgelesenen geräteseitigen Parameterwerte mit Sollparameterwerten für die jeweiligen Schutzgeräte vergleicht und im Rahmen einer Fernkonfiguration diejenigen ausgelesenen geräteseitigen Parameterwerte durch die entsprechenden Sollparameterwerte ersetzt, die von den zugeordneten Sollparameterwerten abweichen.

Auch wird es als vorteilhaft angesehen, wenn die Zentraleinrichtung anhand von Betriebsdaten, die den jeweiligen Betriebszustand des elektrischen Netzes beschreiben, und anhand von Strukturdaten, die die technische Infrastruktur des elektrischen Netzes beschreiben, geeignete Parameterwerte für die Schutzgeräte ermittelt und die ermittelten geeigneten Parameterwerte zu den Schutzgeräten überträgt, falls diese von den ausgelesenen Parameterwerten abweichen.

Bei einer als besonders vorteilhaft angesehenen Variante des Verfahrens ist vorgesehen, dass die Zentraleinrichtung anhand von Betriebsdaten, die den jeweiligen Betriebszustand des elektrischen Netzes beschreiben, anhand von Strukturdaten, die die technische Infrastruktur des elektrischen Netzes beschreiben, und anhand der jeweiligen geräteseitigen Parameterwerte der Schutzgeräte prüft, ob - bezogen auf den jeweiligen Betriebszustand des Netzes - ein Netzfehler, insbesondere ein Kurzschluss, in einem beliebig vorgegebenen Netzabschnitt und ein Auslösen eines oder mehrerer diesem fehlerbehafteten Netzabschnitt zugeordneter Schutzgeräte zu einem kaskadierten Abschalten fehlerfreier Netzabschnitte, insbesondere benachbarter fehlerfreier Netzabschnitte, führen würde und, falls ja, in welchem Umfang.

Bei der letztgenannten Variante ist es außerdem vorteilhaft, wenn bei Überschreiten einer vorgegebenen Umfangsschwelle des Umfangs eines kaskadierten Abschaltens die Zentraleinrichtung prüft, ob modifizierte Parameterwerte für das oder die dem beliebig vorgegebenen Netzabschnitt zugeordneten Schutzgeräte den Umfang des kaskadierten Abschaltens reduzieren würden und im Falle einer Reduktion des Umfangs des kaskadierten Abschaltens die ermittelten modifizierten Parameterwerte an die betroffenen Schutzgeräte zur Neuparametrierung übermittelt.

Darüber hinaus ist es von Vorteil, wenn bei Überschreiten einer vorgegebenen Umfangsschwelle des Umfangs eines kaskadierten Abschaltens die Zentraleinrichtung prüft, ob modifizierte Parameterwerte für diejenigen Schutzgeräte, die zu bezüglich des beliebig vorgegebenen Netzabschnitts benachbarten Netzabschnitten gehören, den Umfang des kaskadierten Abschaltens reduzieren würden und im Falle einer Reduktion des Umfangs des kaskadierten Abschaltens die ermittelten modifizierten Parameterwerte an die betroffenen Schutzgeräte zur Neuparametrierung übermittelt.

Besonders vorteilhaft ist es, wenn bei Überschreiten einer vorgegebenen Umfangsschwelle des Umfangs eines kaskadierten Abschaltens die Zentraleinrichtung prüft, ob modifizierte Parameterwerte für diejenigen Schutzgeräte, die zu allen anderen Netzabschnitten des elektrischen Netzes gehören, den Umfang des kaskadierten Abschaltens reduzieren würden und im Falle einer Reduktion des Umfangs des kaskadierten Abschaltens die ermittelten modifizierten Parameterwerte an die betroffenen Schutzgeräte zur Neuparametrierung übermittelt.

Das oder zumindest eines der dem beliebig vorgegebenen Netzabschnitt zugeordneten Schutzgeräte ist vorzugsweise ein Überstromschutzgerät, bei dem der oder einer der Parameterwerte einen Schwellenstrom definiert, ab dem das Überstromschutzgerät auslöst. In diesem Falle ist es von Vorteil, wenn die Zentraleinrichtung - im Falle einer im Vergleich zu einer normalen Auslastung des elektrischen Netzes erhöhten Auslastung - als geeigneten Parameterwert oder als modifizierten Parameterwert einen gegenüber dem korrespondierenden Parameterwert für die normale Auslastung erhöhten Parameterwert erzeugt und diesen erhöhten Parameterwert an das Überstromschutzgerät übermittelt.

Die Zentraleinrichtung führt die Überprüfung, ob - bezogen auf den jeweiligen Betriebszustand des Netzes - ein Netzfehler, insbesondere ein Kurzschluss, in einem beliebig vorgegebenen Netzabschnitt und ein Auslösen eines oder mehrerer diesem fehlerbehafteten Netzabschnitt zugeordneter Schutzgeräte zu einem kaskadierten Abschalten weiterer fehlerfreier Netzabschnitte führen würde und, falls ja, in welchem Umfang sowie gegebenenfalls die Ermittlung modifizierter Parameterwerte für den jeweils vorgegebenen Netzabschnitt und/oder für andere, insbesondere benachbarte, Netzabschnitte, vorzugsweise jeweils für alle Netzabschnitte des elektrischen Netzes durch, sei es gleichzeitig, zeitlich überschneidend oder nacheinander.

Darüber hinaus ist es vorteilhaft, wenn die Zentraleinrichtung anhand von Betriebsdaten, die den jeweiligen Betriebszustand des elektrischen Netzes beschreiben, und anhand von Strukturdaten, die die technische Infrastruktur des elektrischen Netzes beschreiben, ein die Arbeitsweise und den Zustand das elektrischen Netzes beschreibendes Simulationsmodell erstellt und die Ermittlung geeigneter und/oder modifizierter Parameterwerte auf der Basis des Simulationsmodells berechnet.

Die Zentraleinrichtung ist vorzugsweise mit den Schutzgeräten über ein Datenübertragungsnetz, insbesondere das Internet, verbunden.

Die Zentraleinrichtung wird vorzugsweise durch ein Computerprogramm einer mit dem Datenübertragungsnetz verbundenen Rechnereinrichtung oder mehrerer miteinander zusammenarbeitender Rechnereinrichtungen gebildet.

Der Erfindung liegt ferner die Aufgabe zugrunde, ein System zur Überwachung eines elektrischen Netzes anzugeben, das hinsichtlich der Parametrierung von Schutzgeräten besser als vorbekannte Systeme arbeitet.

Diese Aufgabe wird erfindungsgemäß durch ein System gemäß Patentanspruchs 11 gelöst. Es ergeben sich dabei sinngemäß die gleichen Vorteile wie eingangs für das erfindungsgemäße Verfahrens angegeben.

Das Schutzgerät des Systems weist eine Schnittstelle auf, die ein Auslesen von Parameterwerten durch eine Zentraleinrichtung über ein Datenübertragungsnetz, insbesondere das Internet, ermöglicht.

Die Zentraleinrichtung des Systems ist durch eine mit einem Datenübertragungsnetz verbundene Rechnereinrichtung oder mehrere miteinander zusammenarbeitende Rechnereinrichtungen gebildet und die Rechnereinrichtung oder Rechnereinrichtungen sind derart programmiert, dass sie geräteseitige Parameterwerte aus an das Datenübertragungsnetz angeschlossenen Schutzgeräten des zu überwachenden elektrischen Netzes auslesen.

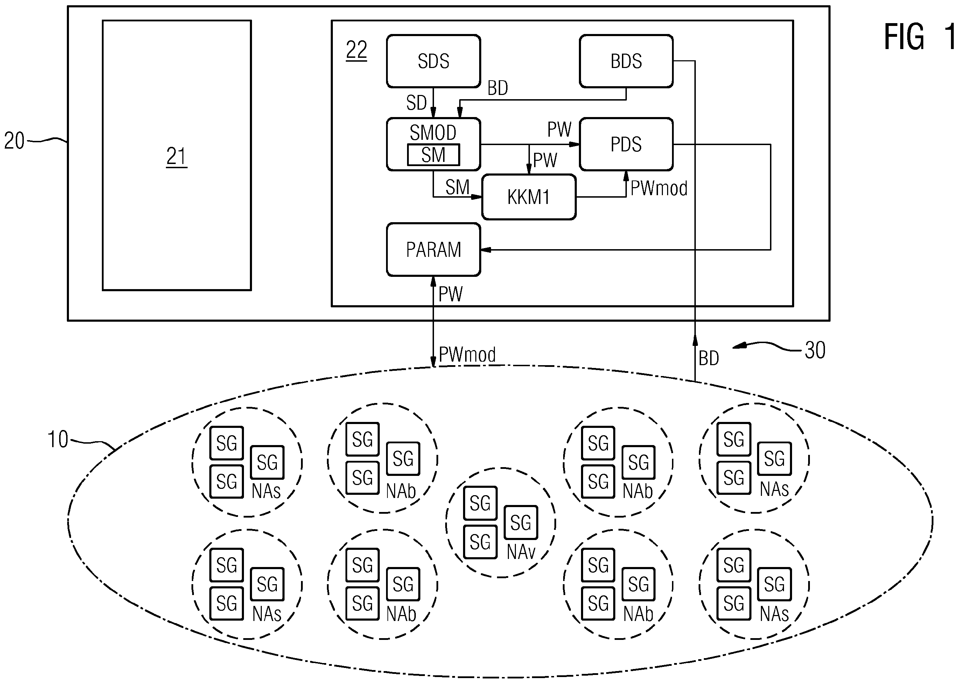

Die Erfindung wird nachfolgend anhand von Ausführungsbeispielen näher erläutert; dabei zeigen beispielhaft
- Figur 1: ein erstes Ausführungsbeispiel für eine Anordnung mit einem elektrischen Netz und einer Zentraleinrichtung zur Überwachung des elektrischen Netzes, wobei bei dem ersten Ausführungsbeispiel geprüft wird, ob die Gefahr eines kaskadierten Abschaltens von Netzabschnitten durch eine Optimierung von Parameterwerten von Schutzgeräten eines beliebig vorgegebenen Netzabschnitts reduziert werden kann,

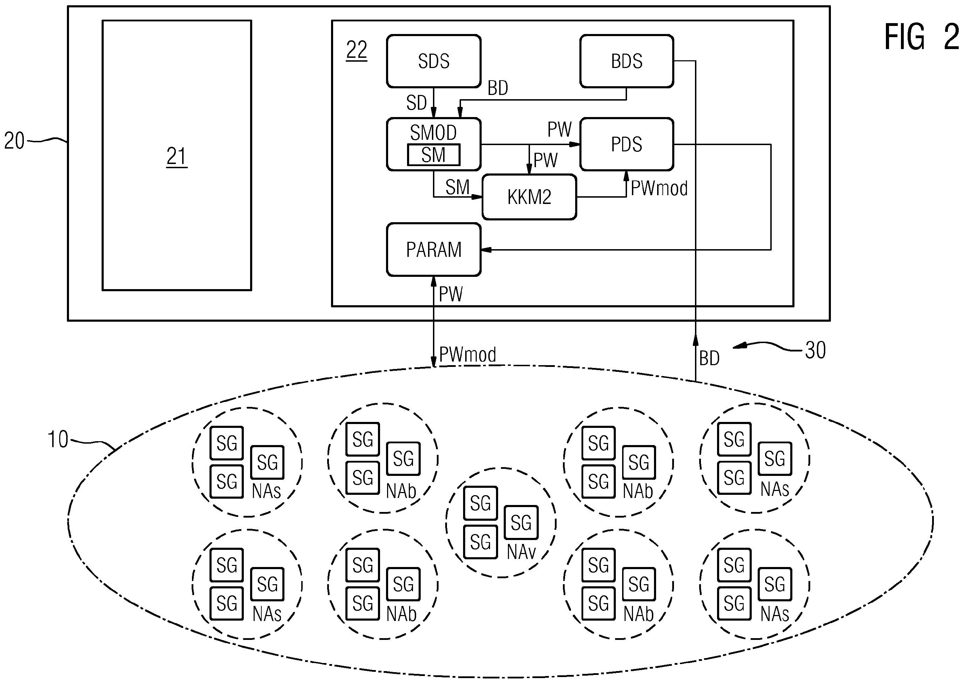

- Figur 2: ein zweites Ausführungsbeispiel für eine Anordnung mit einem elektrischen Netz und einer Zentraleinrichtung zur Überwachung des elektrischen Netzes, wobei bei dem zweiten Ausführungsbeispiel geprüft wird, ob die Gefahr eines kaskadierten Abschaltens von Netzabschnitten durch eine Optimierung von Parameterwerten von Schutzgeräten eines beliebig vorgegebenen Netzabschnitts sowie dazu benachbarter Netzabschnitte reduziert werden kann,

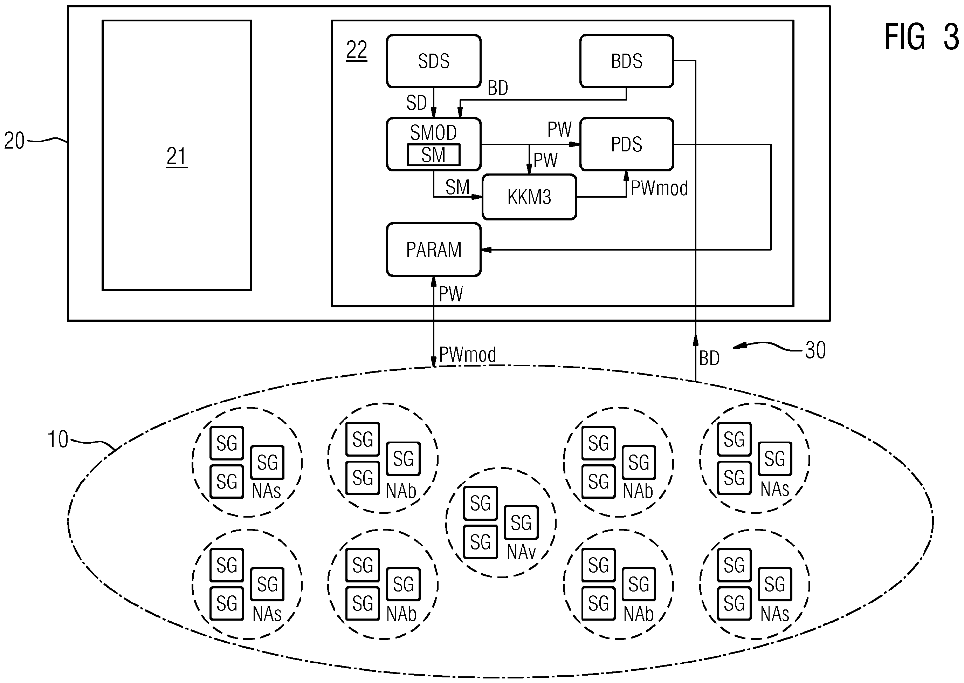

- Figur 3: ein drittes Ausführungsbeispiel für eine Anordnung mit einem elektrischen Netz und einer Zentraleinrichtung zur Überwachung des elektrischen Netzes, wobei bei dem dritten Ausführungsbeispiel geprüft wird, ob die Gefahr eines kaskadierten Abschaltens von Netzabschnitten durch eine Optimierung von Parameterwerten von Schutzgeräten eines beliebig vorgegebenen Netzabschnitts sowie benachbarter und aller anderen Netzabschnitte reduziert werden kann,

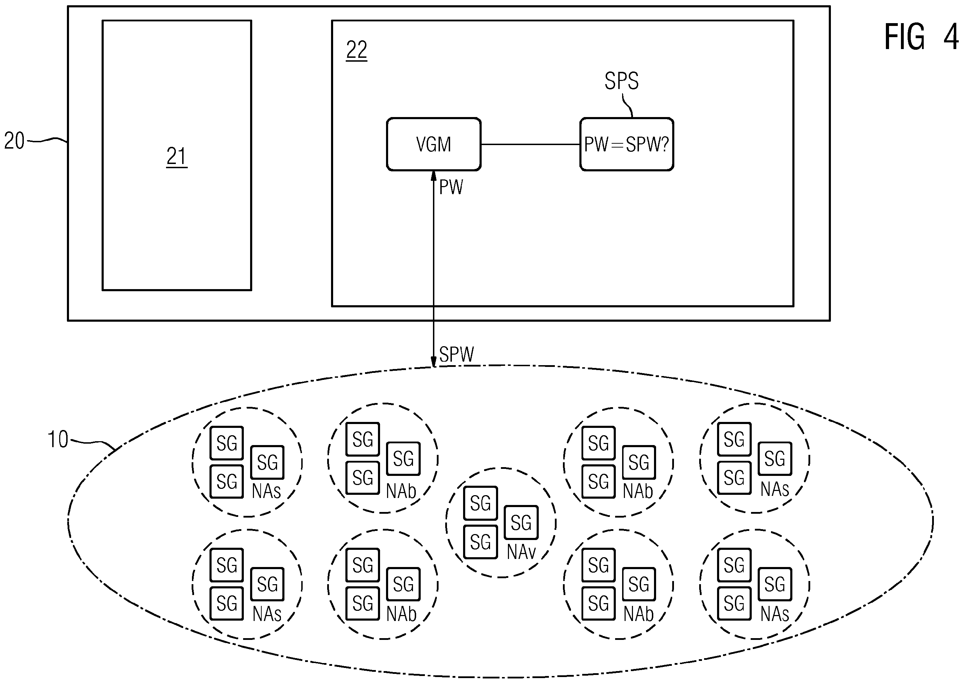

- Figur 4: ein viertes Ausführungsbeispiel für eine Anordnung mit einem elektrischen Netz und einer Zentraleinrichtung zur Überwachung des elektrischen Netzes, wobei bei dem vierten Ausführungsbeispiel die Zentraleinrichtung Parameterwerte von Schutzgeräten überprüft und diese ggf. durch Fernparametrierung ändert, und

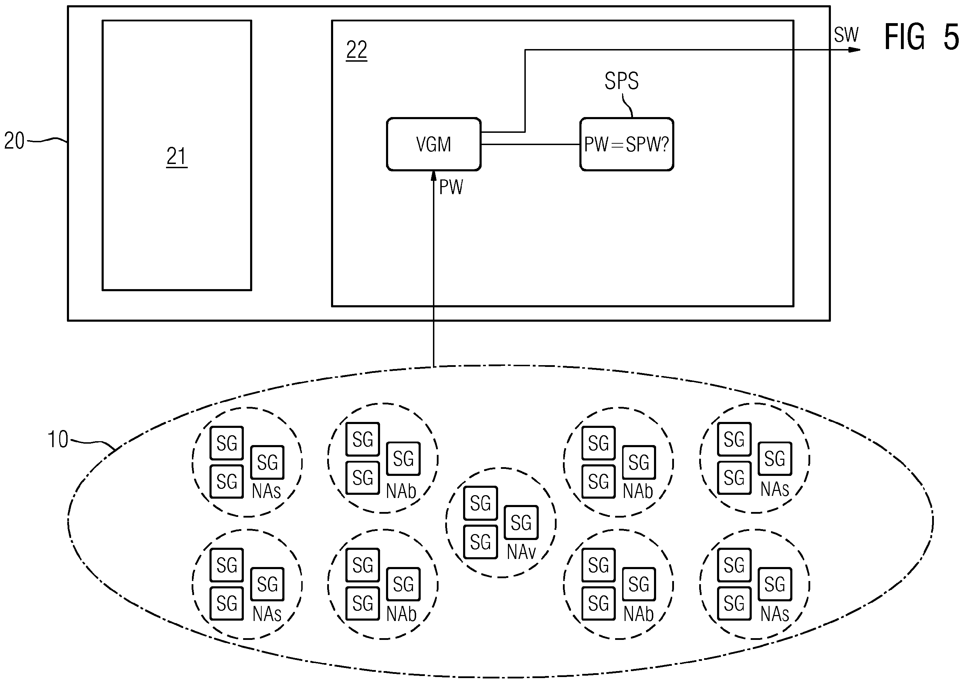

- Figur 5: ein fünftes Ausführungsbeispiel für eine Anordnung mit einem elektrischen Netz und einer Zentraleinrichtung zur Überwachung des elektrischen Netzes, wobei bei dem fünften Ausführungsbeispiel die Zentraleinrichtung Parameterwerte von Schutzgeräten lediglich überprüft und im Falle einer Abweichung von Sollparameterwerten ein Aktualisierungssignal erzeugt.

In den Figuren werden der Übersicht halber für identische oder vergleichbare Komponenten stets dieselben Bezugszeichen verwendet.

Die Figur 1 zeigt in einer vereinfachten schematischen Darstellung ein elektrisches Netz 10, bei dem an einer Vielzahl an ebenfalls nicht im Detail dargestellten Messstellen Schutzgeräte SG angeschlossen sind. Die Schutzgeräte SG überwachen jeweils einen zugeordneten Netzabschnitt des elektrischen Netzes 10 oder zumindest einen Teilabschnitt des jeweils zugeordneten Netzabschnittes. Die Netzabschnitte, die von den Schutzgeräten SG überwacht werden, sind in der Figur 1 mit den Bezugszeichen NAv, NAb und NAs gekennzeichnet.

Die Schutzgeräte SG sind jeweils mit zumindest einem geräteseitigen Parameterwert PW parametriert, der die Arbeitsweise des jeweiligen Schutzgerätes SG beeinflusst.

Die Schutzgeräte SG stehen über ein nur angedeutetes Datenübertragungsnetz 30, bei dem es sich beispielsweise um das Internet handeln kann, mit einer Zentraleinrichtung 20 in Verbindung, die die Schutzgeräte SG hinsichtlich ihrer Parameterwerte PW auslesen kann; die Schutzgeräte SG sind also fernauslesbar. Die Schutzgeräte SG sind bei dem Ausführungsbeispiel gemäß Figur 1 darüber hinaus fernkonfigurierbar; dies bedeutet, dass die Zentraleinrichtung 20 die Parameterwerte PW nicht nur auslesen, sondern auch verändern kann.

Die Zentraleinrichtung 20 umfasst einen Rechner 21 und einen Speicher 22. In dem Speicher 22 ist eine Vielzahl an Datensätzen sowie eine Vielzahl an Programmmodulen abgespeichert, die die Arbeitsweise des Rechners 21 und damit die Arbeitsweise der Zentraleinrichtung 20 bei Ausführung durch den Rechner 21 bestimmen. Bei dem Ausführungsbeispiel gemäß Figur 1 befindet sich in dem Speicher 22 ein Strukturdatensatz SDS, der die technische Infrastruktur des elektrischen Netzes 10 beschreibt. Die Strukturdaten definieren beispielsweise die Länge und Eigenschaften elektrischer Leitungen des elektrischen Netzes 10 sowie deren elektrische Verbindungsstellen.

In dem Speicher 22 ist darüber hinaus ein Betriebsdatensatz BDS abgespeichert, der Betriebsdaten BD des elektrischen Netzes 10 enthält. Die Betriebsdaten BD beschreiben den jeweiligen Betriebszustand des elektrischen Netzes 10 und werden vorzugsweise regelmäßig aktualisiert. Die Betriebsdaten BD können beispielsweise Strom- und Spannungswerte, Lastdaten von Verbrauchern und Einspeisedaten von Generatoren oder Kraftwerken für die jeweiligen Stellen des elektrischen Netzes 10 angeben. Zur zeitnahen Aktualisierung der Betriebsdaten BD bzw. des Betriebsdatensatzes BDS können beispielsweise Messdaten nicht weiter gezeigter Messgeräte oder auch Messdaten der Schutzgeräte SG herangezogen werden.

Der Speicher 22 umfasst darüber hinaus ein Simulationsmodul SMOD, das zur Erstellung eines Simulationsmodells SM zur Simulation des elektrischen Netzes 10 auf der Basis der Strukturdaten SD des Strukturdatensatzes SDS sowie der Betriebsdaten BD des Betriebsdatensatzes BDS geeignet ist.

Das Simulationsmodul SMOD ermittelt auf der Basis des Simulationsmodells SM darüber hinaus Parameterwerte PW, die zum Betrieb der Schutzgeräte SG des elektrischen Netzes 10 geeignet sind und speichert diese in einem Parameterdatensatz PDS des Speichers 22 ab.

Die in dem Parameterdatensatz PDS enthaltenen Parameterwerte PW werden von einem nachgeordneten Parametrierungsmodul PARAM zu den Schutzgeräten SG des elektrischen Netzes 10 übertragen, wodurch eine Parametrierung bzw. gegebenenfalls eine Neuparametrierung der Schutzgeräte SG erfolgt.

In dem Speicher 22 der Zentraleinrichtung 20 ist darüber hinaus ein Fehlerkaskadenerkennungsmodul KKM1 abgespeichert, das auf der Basis des Simulationsmodells SM des Simulationsmoduls SMOD sowie auf der Basis der Parameterwerte PW eine Prüfung dergestalt durchführt, ob - bezogen auf den jeweiligen Betriebszustand des Netzes 10 - ein Netzfehler, insbesondere ein Kurzschluss, in einem beliebig vorgegebenen Netzabschnitt, beispielsweise dem Netzabschnitt NAv in Figur 1, und ein Auslösen eines oder mehrerer diesem Netzabschnitt NAv zugeordneter Schutzgeräte SG zu einem kaskadierten Abschalten anderer fehlerfreier Netzabschnitte, insbesondere benachbarter fehlerfreier Netzabschnitte NAb oder aller anderen bzw. der sonstigen Netzabschnitte NAs führen würde, und falls ja, in welchem Umfang.

Stellt das Fehlerkaskadenerkennungsmodul KKM1 fest, dass der Umfang eines kaskadierten Abschaltens fehlerfreier Netzabschnitte eine vorgegebene Umfangsschwelle überschreitet, so prüft sie, ob modifizierte (und für den Betrieb des Netzes 10 geeignete) Parameterwerte PWmod für die dem vorgegebenen Netzabschnitt NAv zugeordneten Schutzgeräte SG den Umfang des kaskadierten Abschaltens reduzieren würden. Ist dies der Fall, ist also eine Reduktion möglich, so wird das Fehlerkaskadenerkennungsmodul KKM1 die jeweils modifizierten Parameterwerte PWmod an den Parameterdatensatz PDS übermitteln bzw. in diesem abspeichern, wodurch es zu einer Weiterleitung der modifizierten Parameterwerte PWmod mittels des Parametrierungsmoduls PARAM zu den betroffenen Schutzgeräten SG kommen wird.

Handelt es sich bei einem der Schutzgeräte SG beispielsweise um ein Überstromzeitschutzgerät, das durch eine eingestellte Überstromzeitspanne und eine eingestellte Auslösestromschwelle parametriert wird, so kann das Fehlerkaskadenerkennungsmodul KKM1 im Falle eines Ansteigens eines Laststroms innerhalb eines Netzabschnitts des Netzes 10 zunächst prüfen, ob eine Erhöhung der Auslösestromschwelle und/oder der Überstromzeitspanne eine Reduktion der Anfälligkeit des Netzes 10 für eine Blackout-Situation liefern könnte.

Bei dem Verstellen bzw. Neuparametrieren eines Überstromzeitschutzgeräts ist nun zu berücksichtigen, dass damit der jeweilige Netzabschnitt auch mit größeren Strömen belastet wird, was unter Umständen ein Auslösen anderer Schutzgeräte an anderen Stellen des Netzes 10 auslösen könnte. Auch diesbezüglich ist dann wieder gestaffelt zu überprüfen, ob der Gesamtzustand des Energieübertragungsnetzes durch eine Parameteränderung verbessert oder verschlechtert wird.

Zusammengefasst arbeitet die Zentraleinrichtung 20 also derart, dass sie regelmäßig oder unregelmäßig für zumindest einen beliebig vorgegebenen Netzabschnitt, hier den Netzabschnitt NAv, prüft, ob modifizierte Parameterwerte PWmod zu einem geringeren Risiko eines kaskadierten Abschaltens fehlerfreier Schutzgeräte SG führen würden. Ist dies der Fall, kommt es zu einer Neuparametrierung der Schutzgeräte SG des vorgegebenen Netzabschnitts NAv.

Das Erstellen des Simulationsmodells SM auf der Basis von Strukturdaten SD und Betriebsdaten BD ist als solches auf dem Gebiet der Energieversorgungstechnik dem Fachmann bekannt; in diesem Zusammenhang sei auf die einschlägige Literatur verwiesen.

Das Überprüfen des Ausmaßes der Gefahr bzw. das Berechnen des Risikos, dass ein Fehler in einem Netzabschnitt zu einem kaskadierten Abschalten benachbarter oder auch weiterer Netzabschnitte führen könnte (fachsprachlich auch "Blackout"- Problematik genannt) ist als solches auf dem Gebiet der Energieversorgungstechnik dem Fachmann ebenfalls bekannt; in diesem Zusammenhang sei wiederum auf die einschlägige Literatur verwiesen.

Der Rechner 21 und der Speicher 22 müssen im Übrigen nicht an einer einzigen Stelle lokalisiert sein; stattdessen kann der Rechner 21 durch eine Vielzahl an räumlich verteilten Einzelrechnern und der Speicher 22 durch eine Vielzahl an räumlich verteilten Einzelspeichern gebildet sein. Die Zentraleinrichtung 20 kann auch cloud-basiert realisiert sein.

Die Figur 2 zeigt ein weiteres Ausführungsbeispiel für ein elektrisches Netz 10 und eine zugeordnete Zentraleinrichtung 20. Im Unterschied zu dem Ausführungsbeispiel gemäß Figur 1 weist die Zentraleinrichtung 20 gemäß Figur 2 ein Fehlerkaskadenerkennungsmodul KKM2 auf, das eine Überprüfung der Parameterwerte PW und eine Bildung modifizierter Parameterwerte PWmod nicht nur für die Schutzgeräte SG des jeweils vorgegebenen Netzabschnitts NAv durchführt, sondern auch für die benachbarten Netzabschnitte NAb, die zu dem vorgegebenen Netzabschnitt NAv benachbart sind.

Mit anderen Worten überprüft die Zentraleinrichtung 20 mittels des Fehlerkaskadenerkennungsmoduls KKM2 zusätzlich, ob modifizierte Parameterwerte PWmod für diejenigen Schutzgeräte SG, die zu bezüglich des beliebig vorgegebenen Netzabschnittes NAv benachbarten Netzabschnitten NAb gehören, den Umfang eines kaskadierten Abschaltens fehlerfreier Netzabschnitte reduzieren würden. Ist eine solche Reduktion möglich, so ermittelt das Fehlerkaskadenerkennungsmodul KKM2 modifizierte Parameterwerte PWmod für die Schutzgeräte SG der benachbarten Netzabschnitte NAb und parametriert diese über das Parametrierungsmodul PARAM neu. Bezüglich der Neuparametrierung sei auf die obigen Ausführungen im Zusammenhang mit der Figur 1 verwiesen.

Die Figur 3 zeigt ein weiteres Ausführungsbeispiel für ein elektrisches Netz 10, das von einer Zentraleinrichtung 20 verwaltet bzw. gesteuert wird. Im Unterschied zu den Ausführungsbeispielen gemäß den Figuren 1 und 2 weist die Zentraleinrichtung 20 gemäß Figur 3 ein Fehlerkaskadenerkennungsmodul KKM3 auf, das zur Überprüfung der Gefahr eines kaskadierten Abschaltens fehlerfreier Netzabschnitte - bezogen auf einen beliebig vorgegebenen Netzabschnitt NAv - nicht nur diesen sowie benachbarte Netzabschnitte NAb berücksichtigt, sondern auch alle sonstigen Netzabschnitte NAs des elektrischen Netzes 10.

Stellt das Fehlerkaskadenerkennungsmodul KKM3 fest, dass eine Reduktion der Gefahr eines kaskadierten Abschaltens möglich ist, so ermittelt sie für alle Schutzgeräte SG in allen Netzabschnitten NAv, NAb und NAs modifizierte Parameterwerte PWmod, die über das Parametrierungsmodul PARAM zur Neuparametrierung der betroffenen Schutzgeräte SG an diese übermittelt werden. Im Übrigen gelten die obigen Ausführungen im Zusammenhang mit den Figuren 1 und 2 entsprechend.

Im Zusammenhang mit der Arbeitsweise der Fehlerkaskadenerkennungsmodule KKM1, KKM2 und KKM3 der Figuren 1 bis 3 sei nur ergänzend erwähnt, dass eine Überprüfung der Parameterwerte PW und eine Ermittlung der modifizierten Parameterwerte PWmod für alle Netzabschnitte des elektrischen Netzes 10 durchgeführt werden kann, indem jeder der Netzabschnitte - wie oben beschrieben - jeweils zumindest einmal als der "vorgegebene" Netzabschnitt NAv angesehen bzw. behandelt wird.

Mit anderen Worten kann jeder Netzabschnitt des elektrischen Netzes 10 jeweils ein vorgegebener Netzabschnitt NAv im Sinne der obigen Erläuterungen sein; demgemäß kann auch jeder Netzabschnitt des elektrischen Netzes 10 je nach Wahl des vorgegebenen Netzabschnittes NAv einen benachbarten Netzabschnitt NAb oder einen sonstigen Netzabschnitt NAs bilden.

Die obigen Verfahren zur Überprüfung der Blackout-Gefahr können für jeden der Netzabschnitte als "vorgegebenen" Netzabschnitt gleichzeitig, zeitlich überschneidend oder nacheinander erfolgen, je nach der zur Verfügung stehenden Rechenleistung des Rechners 21.

Auch ist es vorteilhaft, die Überprüfung der Blackout-Gefahr zyklisch, regelmäßig oder unregelmäßig zu wiederholen, um eine zeitnahe Anpassung der Parameterwerte an geänderte Last- und/oder Einspeisesituationen zu gewährleisten.

Die Überprüfung und Neuparametrierung kann im Übrigen vollautomatisiert erfolgen oder teilautomatisiert: Beispielsweise kann bei einem teilautomatisierten Betrieb eine Anzeigeeinrichtung der Zentraleinrichtung 20 die jeweilige Stabilität des Netzes 10 anzeigen, wobei eine Neuparametrierung nur dann durchgeführt wird, wenn diese von einer Bedienperson freigegeben wird. Die Anzeige kann beispielsweise ampelähnlich mit grün ein stabiles Netz 10, mit gelb ein stabilitätsmäßig gefährdetes Netz 10 und mit rot ein instabiles Netz 10 anzeigen.

Die Figur 4 zeigt ein weiteres Ausführungsbeispiel für ein elektrisches Netz 10 und eine Zentraleinrichtung 20, die das elektrische Netz 10 überwacht und Schutzgeräte SG des elektrischen Netzes 10 ausliest. Bei dem Ausführungsbeispiel gemäß Figur 4 ist in dem Speicher 22 ein Vergleichsmodul VGM abgespeichert, das die jeweiligen Parameterwerte PW der Schutzgeräte SG des elektrischen Netzes 10 ausliest. Das Vergleichsmodul VGM vergleicht die ausgelesenen Parameterwerte PW mit Sollparameterwerten SPW, die in einem Sollparameterdatensatz SPS des Speichers 22 abgespeichert sind. Stellt das Vergleichsmodul VGM fest, dass die ausgelesenen geräteseitigen Parameterwerte PW von Sollparameterwerten SPW des Sollparameterdatensatzes SPS abweichen, so überschreibt sie im Rahmen einer Fernkonfiguration die betroffenen ausgelesenen geräteseitigen Parameterwerte PW der Schutzgeräte SG durch die entsprechenden Sollparameterwerte SPW.

Die Figur 5 zeigt ein weiteres Ausführungsbeispiel für ein elektrisches Netz 10 und eine Zentraleinrichtung 20, die mit Schutzgeräten SG des elektrischen Netzes 10 zusammenarbeitet.

In einem Speicher 22 der Zentraleinrichtung 20 ist ein Sollparameterdatensatz SPS abgespeichert, in dem Sollparameterwerte SPW für die Schutzgeräte SG abgespeichert sind. Ein Vergleichsmodul VGM vergleicht die aus den Schutzgeräten SG ausgelesenen Parameterwerte PW mit den Sollparameterwerten SPW und erzeugt im Falle einer Abweichung ein Aktualisierungssignal SW, das von der Zentraleinrichtung 20 ausgegeben wird.

Liegt ein solches Aktualisierungssignal SW seitens der Zentraleinrichtung 20 vor, kann Wartungspersonal vor Ort die Schutzgeräte SG manuell neu konfigurieren bzw. neu parametrieren, damit die tatsächlichen Parameterwerte in den Schutzgeräten SG mit den Sollparameterwerten SPW im Sollparameterdatensatz SPS des Speichers 22 der Zentraleinrichtung 20 übereinstimmen. Im Übrigen sei auf die obigen Ausführungen im Zusammenhang mit den Figuren 1 bis 4 verwiesen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: elektrisches Netz
- 20: Zentraleinrichtung
- 21: Rechner
- 22: Speicher
- 30: Datenübertragungsnetz

- BD: Betriebsdaten
- BDS: Betriebsdatensatz
- KKM1: Fehlerkaskadenerkennungsmodul
- KKM2: Fehlerkaskadenerkennungsmodul
- KKM3: Fehlerkaskadenerkennungsmodul
- NAb: Netzabschnitt
- NAs: Netzabschnitt
- NAv: Netzabschnitt
- PARAM: Parametrierungsmodul
- PDS: Parameterdatensatz
- PW: Parameterwert
- PWmod: modifizierter Parameterwert
- SD: Strukturdaten
- SDS: Strukturdatensatz
- SG: Schutzgeräte
- SM: Simulationsmodell
- SMOD: Simulationsmodul
- SPS: Sollparameterdatensatz
- SPW: Sollparameterwerte
- SW: Aktualisierungssignal
- VGM: Vergleichsmodul

## Patentansprüche

1. Verfahren zum Betreiben eines elektrischen Netzes (10), insbesondere eines Energieversorgungsnetzes oder Energieverteilnetzes, bei dem an einer Vielzahl an Messstellen Schutzgeräte (SG) angeschlossen sind, die einen zugeordneten Netzabschnitt des elektrischen Netzes (10) überwachen und jeweils mit zumindest einem geräteseitigen Parameterwert (PW) parametriert sind, der die Arbeitsweise des jeweiligen Schutzgerätes (SG) beeinflusst, wobei
- die Schutzgeräte (SG) fernauslesbar sind und mit einer übergeordneten Zentraleinrichtung (20) in Verbindung stehen und
- die Zentraleinrichtung (20) die geräteseitigen Parameterwerte (PW) aus den Schutzgeräten (SG),
**dadurch gekennzeichnet, dass** die Zentraleinrichtung (20) anhand von Betriebsdaten (BD), die den jeweiligen Betriebszustand des elektrischen Netzes (10) beschreiben, anhand von Strukturdaten (SD), die die technische Infrastruktur des elektrischen Netzes (10) beschreiben, und anhand der jeweiligen geräteseitigen Parameterwerte der Schutzgeräte (SG) prüft, ob - bezogen auf den jeweiligen Betriebszustand des Netzes (10) - ein Netzfehler, insbesondere ein Kurzschluss, in einem beliebig vorgegebenen Netzabschnitt (NAv) und ein Auslösen eines oder mehrerer diesem fehlerbehafteten Netzabschnitt zugeordneter Schutzgeräte (SG) zu einem kaskadierten Abschalten fehlerfreier Netzabschnitte, insbesondere benachbarter fehlerfreier Netzabschnitte, führen würde und, falls ja, in welchem Umfang, und dass
bei Überschreiten einer vorgegebenen Umfangsschwelle des Umfangs eines kaskadierten Abschaltens die Zentraleinrichtung (20) prüft, ob modifizierte Parameterwerte (PWmod) für diejenigen Schutzgeräte (SG), die zu bezüglich des beliebig vorgegebenen Netzabschnitts (NAv) benachbarten Netzabschnitten (NAb) gehören, den Umfang des kaskadierten Abschaltens reduzieren würden und im Falle einer Reduktion des Umfangs des kaskadierten Abschaltens die ermittelten modifizierten Parameterwerte (PWmod) an die betroffenen Schutzgeräte (SG) zur Neuparametrierung übermittelt.

2. Verfahren nach Anspruch 1,
**dadurch gekennzeichnet, dass**
die Zentraleinrichtung (20) die ausgelesenen geräteseitigen Parameterwerte mit Sollparameterwerten (SPW) für die jeweiligen Schutzgeräte (SG) vergleicht und ein Aktualisierungssignal (SW) erzeugt, wenn die ausgelesenen Parameterwerte von den zugeordneten Sollparameterwerten abweichen.

3. Verfahren nach einem der voranstehenden Ansprüche,
**dadurch gekennzeichnet, dass**
- die Schutzgeräte (SG) fernkonfigurierbar sind und
- die Zentraleinrichtung (20) die ausgelesenen geräteseitigen Parameterwerte mit Sollparameterwerten für die jeweiligen Schutzgeräte (SG) vergleicht und im Rahmen einer Fernkonfiguration die ausgelesenen geräteseitigen Parameterwerte durch die entsprechenden Sollparameterwerte ersetzt, falls die ausgelesenen geräteseitigen Parameter von den zugeordneten Sollparametern abweichen.

4. Verfahren nach einem der voranstehenden Ansprüche,
**dadurch gekennzeichnet, dass**
die Zentraleinrichtung (20) anhand von Betriebsdaten (BD), die den jeweiligen Betriebszustand des elektrischen Netzes (10) beschreiben, und anhand von Strukturdaten (SD), die die technische Infrastruktur des elektrischen Netzes (10) beschreiben, geeignete Parameterwerte für die Schutzgeräte (SG) ermittelt und die ermittelten geeigneten Parameterwerte zu den Schutzgeräten (SG) überträgt, falls diese von den ausgelesenen Parameterwerten abweichen.

5. Verfahren nach einem der vorhergehenden Ansprüche,
**dadurch gekennzeichnet, dass**
- bei Überschreiten einer vorgegebenen Umfangsschwelle des Umfangs eines kaskadierten Abschaltens die Zentraleinrichtung (20) prüft, ob modifizierte Parameterwerte (PWmod) für das oder die dem beliebig vorgegebenen Netzabschnitt (NAv) zugeordneten Schutzgeräte (SG) den Umfang des kaskadierten Abschaltens reduzieren würden und
- im Falle einer Reduktion des Umfangs des kaskadierten Abschaltens die ermittelten modifizierten Parameterwerte (PWmod) an die betroffenen Schutzgeräte (SG) zur Neuparametrierung übermittelt.

6. Verfahren nach einem der voranstehenden,
**dadurch gekennzeichnet, dass**
- bei Überschreiten einer vorgegebenen Umfangsschwelle des Umfangs eines kaskadierten Abschaltens die Zentraleinrichtung (20) prüft, ob modifizierte Parameterwerte (PWmod) für diejenigen Schutzgeräte (SG), die zu allen anderen Netzabschnitten (NAs) des elektrischen Netzes (10) gehören, den Umfang des kaskadierten Abschaltens reduzieren würden und
- im Falle einer Reduktion des Umfangs des kaskadierten Abschaltens die ermittelten modifizierten Parameterwerte (PWmod) an die betroffenen Schutzgeräte (SG) zur Neuparametrierung übermittelt.

7. Verfahren nach einem der voranstehenden,
**dadurch gekennzeichnet, dass**
- das oder zumindest eines der dem beliebig vorgegebenen Netzabschnitt zugeordneten Schutzgeräte (SG) ein Überstromschutzgerät ist, bei dem der oder einer der Parameterwerte (PW) einen Schwellenstrom definiert, ab dem das Überstromschutzgerät auslöst, und
- die Zentraleinrichtung (20) - im Falle einer im Vergleich zu einer normalen Auslastung des elektrischen Netzes (10) erhöhten Auslastung - als geeigneten Parameterwert (PW) oder als modifizierten Parameterwert (PWmod) einen gegenüber dem korrespondierenden Parameterwert für die normale Auslastung erhöhten Parameterwert erzeugt und diesen erhöhten Parameterwert an das Überstromschutzgerät übermittelt.

8. Verfahren nach einem der voranstehenden,
**dadurch gekennzeichnet, dass**
die Zentraleinrichtung (20) die Überprüfung,
ob - bezogen auf den jeweiligen Betriebszustand des Netzes (10) - ein Netzfehler, insbesondere ein Kurzschluss, in einem beliebig vorgegebenen Netzabschnitt und ein Auslösen eines oder mehrerer diesem fehlerbehafteten Netzabschnitt zugeordneter Schutzgeräte (SG) zu einem kaskadierten Abschalten weiterer fehlerfreier Netzabschnitte führen würde und, falls ja, in welchem Umfang sowie gegebenenfalls die Ermittlung modifizierter Parameterwerte (PWmod) für den jeweils vorgegebenen Netzabschnitt und/oder für andere, insbesondere benachbarte, Netzabschnitte,
jeweils für alle Netzabschnitte des elektrischen Netzes (10) durchführt, sei es gleichzeitig, zeitlich überschneidend oder nacheinander.

9. Verfahren nach einem der voranstehenden Ansprüche,
**dadurch gekennzeichnet, dass**
die Zentraleinrichtung (20) anhand von Betriebsdaten (BD), die den jeweiligen Betriebszustand des elektrischen Netzes (10) beschreiben, und anhand von Strukturdaten (SD), die die technische Infrastruktur des elektrischen Netzes (10) beschreiben, ein die Arbeitsweise und den Zustand das elektrischen Netzes (10) beschreibendes Simulationsmodell (SM) erstellt und die Ermittlung geeigneter und/oder modifizierter Parameterwerte auf der Basis des Simulationsmodells (SM) berechnet.

10. Verfahren nach einem der voranstehenden Ansprüche,
**dadurch gekennzeichnet, dass**
- die Zentraleinrichtung (20) mit den Schutzgeräten (SG) über ein Datenübertragungsnetz (30), insbesondere das Internet, verbunden ist und
- die Zentraleinrichtung (20) durch ein Computerprogramm einer mit dem Datenübertragungsnetz (30) verbundenen Rechnereinrichtung oder mehrerer miteinander zusammenarbeitender Rechnereinrichtungen gebildet wird.

11. System zur Überwachung eines elektrischen Netzes (10), aufweisend:
ein Schutzgerät (SG) zum Schützen eines Netzabschnitts eines elektrischen Netzes (10)mit einer Schnittstelle, die ein Auslesen von Parameterwerten (PW) durch eine Zentraleinrichtung (20) über ein Datenübertragungsnetz (30), insbesondere das Internet, ermöglicht, und
eine Zentraleinrichtung (20) mit einer mit einem Datenübertragungsnetz (30) verbundenen Rechnereinrichtung oder mit mehreren miteinander zusammenarbeitenden Rechnereinrichtungen , wobei die Rechnereinrichtung oder Rechnereinrichtungen derart programmiert sind, dass sie geräteseitige Parameterwerte (PW) aus an das Datenübertragungsnetz (30) angeschlossenen Schutzgeräten (SG) des zu überwachenden elektrischen Netzes (10) auslesen,**dadurch gekennzeichnet, dass**
das System ausgebildet ist, ein Verfahren gemäß einem der vorhergehenden Ansprüche auszuführen.

## Claims

1. Method for operating an electrical network (10), in particular a power supply network or power distribution network, in which protective apparatuses (SG) are connected to a multiplicity of measurement positions, which apparatuses monitor an assigned network section of the electrical network (10) and are respectively parameterized with at least one apparatus-side parameter value (PW) which influences the mode of operation of the respective protective apparatus (SG), wherein
- the protective apparatuses (SG) are remotely readable and are connected to a superordinate central device (20), and
- the central device (20) reads the apparatus-side parameter values (PW) from the protective apparatuses (SG),
**characterized in that**,
with the aid of operating data (BD) which describe the respective operating state of the electrical network (10), with the aid of structure data (SD) which describe the technical infrastructure of the electrical network (10), and with the aid of the respective apparatus-side parameter values of the protective apparatuses (SG), the central device (20) checks whether - in relation to the respective operating state of the network (10) - there is a network fault, in particular a short circuit, in an arbitrarily predetermined network section (NAv) and actuation of one or more protective apparatuses (SG) assigned to this faulty network section would lead to a cascaded shutdown of fault-free network sections, in particular neighbouring fault-free network sections, and, if so, to what extent,
and **in that**,
when a predetermined extent threshold of the extent of a cascaded shutdown is exceeded, the central device (20) checks whether modified parameter values (PWmod) for those protective apparatuses (SG) which belong to neighbouring network sections (NAb) in relation to the arbitrarily predetermined network section (NAv) would reduce the extent of the cascaded shutdown, and in the case of a reduction of the extent of the cascaded shutdown, the determined modified parameter values (PWmod) are transmitted to the relevant protective apparatuses (SG) for reparameterization.

2. Method according to Claim 1,
**characterized in that**
the central device (20) compares the read-out apparatus-side parameter values with setpoint parameter values (SPW) for the respective protective apparatuses (SG) and generates an update signal (SW) when the read-out parameter values differ from the assigned setpoint parameter values.

3. Method according to one of the preceding claims, **characterized in that**
- the protective apparatuses (SG) are remotely configurable, and
- the central device (20) compares the read-out apparatus-side parameter values with setpoint parameter values for the respective protective apparatuses (SG) and, in the scope of a remote configuration, replaces the read-out apparatus-side parameter values with the corresponding setpoint parameter values if the read-out apparatus-side parameters differ from the assigned setpoint parameters.

4. Method according to one of the preceding claims,
**characterized in that**,
with the aid of operating data (BD) which describe the respective operating state of the electrical network (10), and with the aid of structure data (SD) which describe the technical infrastructure of the electrical network (10), the central device (20) determines suitable parameter values for the protective apparatuses (SG) and transmits the determined suitable parameter values to the protective apparatuses (SG) if they differ from the read-out parameter values.

5. Method according to one of the preceding claims,
**characterized in that**,
- when a predetermined extent threshold of the extent of a cascaded shutdown is exceeded, the central device (20) checks whether modified parameter values (PWmod) for the one or more protective apparatuses (SG) assigned to the arbitrarily predetermined network section (NAv) would reduce the extent of the cascaded shutdown, and
- in the case of a reduction of the extent of the cascaded shutdown, the determined modified parameter values (PWmod) are transmitted to the relevant protective apparatuses (SG) for reparameterization.

6. Method according to one of the preceding claims,
**characterized in that**,
- when a predetermined extent threshold of the extent of a cascaded shutdown is exceeded, the central device (20) checks whether modified parameter values (PWmod) for those protective apparatuses (SG) which belong to all other network sections (NAs) of the electrical network (10) would reduce the extent of the cascaded shutdown, and
- in the case of a reduction of the extent of the cascaded shutdown, the determined modified parameter values (PWmod) are transmitted to the relevant protective apparatuses (SG) for reparameterization.

7. Method according to one of the preceding claims,
**characterized in that**
- the or at least one of the protective apparatuses (SG) assigned to the arbitrarily predetermined network section is an overcurrent protective apparatus, in which the or one of the parameter values (PW) defines a threshold current beyond which the overcurrent protective apparatus is actuated, and
- the central device (20) - in the case of an increased workload in comparison with a normal workload of the electrical network (10) - generates as a suitable parameter value (PW), or as a modified parameter value (PWmod), an increased parameter value in relation to the corresponding parameter value for the normal workload and transmits this increased parameter value to the overcurrent protective apparatus.

8. Method according to one of the preceding claims,
**characterized in that**
the central device (20) carries out the check
whether - in relation to the respective operating state of the network (10) - a network fault, in particular a short circuit, in an arbitrarily predetermined network section and actuation of one or more protective apparatuses (SG) assigned to this faulty network section would lead to a cascaded shutdown of further fault-free network sections, and, if so, to what extent, and optionally the determination of modified parameter values (PWmod) for the respective predetermined network section and/or for other, in particular neighbouring, network sections,
respectively for all network sections of the electrical network (10), either simultaneously, with a time overlap or successively.

9. Method according to one of the preceding claims,
**characterized in that**
the central device (20), with the aid of operating data (BD) which describe the respective operating state of the electrical network (10), and with the aid of structure data (SD) which describe the technical infrastructure of the electrical network (10), compiles a simulation model (SM) describing the mode of operation and the state of the electrical network (10) and calculates the determination of suitable and/or modified parameter values on the basis of the simulation model (SM).

10. Method according to one of the preceding claims,
**characterized in that**
- the central device (20) is connected to the protective apparatuses (SG) by means of a data transmission network (30), in particular the Internet, and
- the central device (20) is formed by a computer program of a computer device connected to the data transmission network (30) or a plurality of computer devices cooperating with one another.

11. System for monitoring an electrical network (10), comprising:
a protective apparatus (SG) for protecting a network section of an electrical network (10), having an interface which permits a readout of parameter values (PW) by a central device (20) by means of a data transmission network (30), in particular the Internet, and
a central device (20) having a computer device connected to a data transmission network (30) or to a plurality of computer devices cooperating with one another, wherein the computer device or computer devices are programmed in such a way that they read out apparatus-side parameter values (PW) from protective apparatuses (SG) of the electrical network to be monitored (10) which are connected to the data transmission network (30),
**characterized in that**
the system is designed to execute a method according to one of the preceding claims.

## Revendications

1. Procédé pour faire fonctionner un réseau (10) électrique, en particulier un réseau d'alimentation en énergie ou un réseau de distribution d'énergie, dans lequel à une pluralité de points de mesure sont raccordés des appareils (SG) de protection, qui contrôlent une partie qui leur est affectée du réseau (10) électrique et qui sont paramétrés chacun par au moins une valeur (PW) de paramètre du côté des appareils, qui influence le mode de travail de l'appareil (SG) de protection respectif, dans lequel
- les appareils (SG) de protection peuvent être lus à distance et sont en liaison avec un dispositif (20) central supérieur hiérarchiquement et
- le dispositif (20) central lit les valeurs (PW) de paramètre du côté des appareils dans les appareils (SG) de protection, **caractérisé en ce que**
le dispositif (20) central, à l'aide de données (BD) de fonctionnement, qui décrivent l'état de fonctionnement respectif du réseau (10) électrique, à l'aide de données (SD) de structure, qui décrivent l'infrastructure technique du réseau (10) électrique, et à l'aide des valeurs de paramètre du côté des appareils (SG) de protection contrôle si - rapporté à l'état de fonctionnement respectif du réseau (10) électrique - une défaillance du réseau, notamment un court-circuit, conduirait, dans une partie (NAv) quelconque donnée à l'avance du réseau et un déclenchement d'un ou de plusieurs appareils (SG) de protection affectés à cette partie défectueuse du réseau conduirait à une mise hors circuit en cascade de parties du réseau sans défaut, notamment de parties du réseau sans défaut voisines et, si c'est le cas, dans quelle mesure, et **en ce que**
si un seuil donné à l'avance de la mesure d'une mise hors circuit en cascade est dépassé, le dispositif (20) central contrôle si des valeurs (PWmod) de paramètre modifiées, pour les appareils (SG) de protection, qui appartiennent aux parties (NAb) de réseau voisines de la partie (NAv) de réseau quelconque donnée à l'avance, réduiraient la mesure de la mise en hors circuit en cascade, et dans le cas d'une réduction de la mesure de la mise hors circuit en cascade, transmet les valeurs (PWmod) de paramètre modifiées aux appareils (SG) de protection concernés pour un nouveau paramétrage.

2. Procédé suivant la revendication 1,
**caractérisé en ce que**
le dispositif (20) central compare les valeurs de paramètre du côté des appareils qui sont lues à des valeurs (SPW) de paramètre de consigne pour les appareils (SG) de protection respectifs et produit un signal (SW) de mise à jour, si les valeurs de paramètre, qui sont lues, s'écartent des valeurs de paramètre de consigne qui leur sont affectées.

3. Procédé suivant l'une des revendications précédentes,
**caractérisé en ce que**
- les appareils (SG) de protection peuvent être configurés à distance et
- le dispositif (20) central compare les valeurs de paramètre du côté des appareils, qui sont lues, à des valeurs de paramètre de consigne pour les appareils (SG) de protection respectifs et, dans le cadre d'une configuration à distance, remplace les valeurs de paramètre du côté des appareils, qui sont lues, par les valeurs de paramètre de consigne correspondantes, si les paramètres du côté des appareils, qui sont lus, s'écartent des paramètres de consigne, qui leur sont affectés.

4. Procédé suivant l'une des revendications précédentes,
**caractérisé en ce que**
le dispositif (20) central détermine, à l'aide de données (BD) de fonctionnement, qui décrivent l'état de fonctionnement respectif du réseau (10) électrique, et à l'aide de données (SD) de structure, qui décrivent l'infrastructure technique du réseau (10) électriques, des valeurs de paramètre appropriées pour les appareils (SG) de protection et transmet les valeurs de paramètre appropriées, qui ont été déterminées, aux appareils (SG) de protection, si celles-ci s'écartent des valeurs de paramètre, qui sont lues.

5. Procédé suivant l'une des revendications précédentes,
**caractérisé en ce que**
- si l'on passe en-dessous d'un seuil donné à l'avance de la mesure d'une mise hors circuit en cascade, le dispositif (20) central contrôle si des valeurs (PWmod) de paramètre modifiées pour le ou les appareils (SG) de protection affectés à la partie (NAv) quelconque donnée à l'avance réduiraient la mesure de la mise hors circuit en cascade et
- dans le cas d'une réduction de la mesure de la mise hors circuit en cascade, transmet les valeurs (PWmod) de paramètre modifiées, qui sont déterminées, aux appareils (SG) de protection concernés pour un nouveau paramétrage.

6. Procédé suivant l'une des revendications précédentes,
**caractérisé en ce que**
- si l'on passe en-dessous d'un seuil donné à l'avance de la mesure d'une mise hors circuit en cascade, l'unité (20) centrale contrôle si des valeurs (PWmod) de paramètre modifiées pour les appareils (SG) de protection, qui appartiennent à toutes les autres parties (NAs) du réseau (10) électrique, réduiraient la mesure de la mise hors circuit en cascade et
- dans le cas d'une réduction de la mesure de la mise hors circuit en cascade, transmet les valeurs (PWmod) de paramètre modifiées, qui sont déterminées, aux appareils (SG) de protection concernés pour un nouveau paramétrage.

7. Procédé suivant l'une des revendications précédentes,
**caractérisé en ce que**
- le ou au moins l'un des appareils (SG) de protection affecté à la partie quelconque donnée à l'avance du réseau est un appareil de protection vis-à-vis d'une surintensité, dans lequel la ou une des valeurs (PW) de paramètre définit un courant de seuil à partir duquel l'appareil de protection vis-à-vis d'une surintensité se déclenche, et
- le dispositif (20) central - dans le cas d'une utilisation plus grande qu'une utilisation normale du réseau (10) électrique - produit comme valeur (PW) de paramètre appropriée ou comme valeur (PWmod) de paramètre modifiée, une valeur de paramètre augmentée par rapport à la valeur de paramètre correspondante pour l'utilisation normale et transmet cette valeur de paramètre augmentée à l'appareil de protection vis-à-vis d'une surintensité.

8. Procédé suivant l'une des revendications précédentes,
**caractérisé en ce que**
le dispositif (20) central effectue respectivement pour toutes les parties du réseau (10) électrique, que ce soit en même temps, avec recoupement dans le temps ou successivement le contrôle du point de savoir
si - rapporté à l'état de fonctionnement du réseau (10) - une défaillance du réseau, notamment un court-circuit, dans n'importe quelle partie du réseau donnée à l'avance et un déclenchement d'un ou de plusieurs appareils (SG) de protection affectés à cette partie défectueuse du réseau aurait conduit à une mise hors circuit en cascade d'autres parties du réseau sans défaut et, dans l'affirmative, dans quelle mesure, ainsi que le cas échéant la détermination de valeurs (PWmod) de paramètre modifiées pour la partie du réseau respectivement donnée à l'avance et/ou pour d'autres parties du réseau, notamment voisines.

9. Procédé suivant l'une des revendications précédentes,
**caractérisé en ce que**
le dispositif (20) central établit à l'aide de données (BD) de fonctionnement, qui décrivent l'état de fonctionnement respectif du réseau (10) électrique, et à l'aide de données (SD) de structure, qui décrivent l'infrastructure technique du réseau (10) électrique, un modèle (SM) de simulation, décrivant le mode de travail et l'état du réseau (10) électrique, et calcule la détermination de valeurs de paramètre appropriées et/ou modifiées sur la base du modèle (SM) de simulation.

10. Procédé suivant l'une des revendications précédentes,
**caractérisé en ce que**
- le dispositif (20) central est relié aux appareils (SG) de protection par un réseau (30) de transmission de données, notamment par internet et
- le dispositif (20) central est formé d'un programme informatique d'un dispositif informatique relié au réseau (30) de transmission de données ou de plusieurs dispositifs informatiques coopérants entre eux.

11. Système de contrôle d'un réseau (10) électrique, comportant :
un appareil (SG) de protection pour protéger une partie d'un réseau (10) électrique comprenant une interface, qui rend possible une lecture de valeurs (PW) de paramètre par un dispositif (20) central, par l'intermédiaire d'un réseau (30) de transmission de données, notamment par internet, et
un dispositif (20) central ayant un dispositif informatique relié à un réseau (30) de transmission de données ou à plusieurs dispositifs informatiques coopérants entre eux, dans lequel le dispositif informatique ou les dispositifs informatiques sont programmés, de manière à ce que les valeurs (PW) de paramètre du côté des appareils soient lues dans des appareils (SG) de protection, raccordés au réseau (30) de transmission de données, du réseau (10) électrique à contrôler, **caractérisé en ce que**
le système est constitué pour effectuer un procédé suivant l'une des revendications précédentes.
